# FASCICULE DE BREVET EUROPEEN

(11) **EP 3 322 612 B1**
(45) Date de publication et mention de la délivrance du brevet: **03.08.2022**
(21) Numéro de dépôt: 16745798.5
(22) Date de dépôt: 07.07.2016
(51) Int. Cl.: H02K 3/38, H02K 7/10, H02K 9/06, H02K 11/04, B60L 50/16, B60L 58/20

(54) **MACHINE ÉLECTRIQUE TOURNANTE POUR VÉHICULE AUTOMOBILE**
DREHENDE ELEKTRISCHE MASCHINE FÜR EIN FAHRZEUG
ROTARY ELECTRIC MACHINE FOR VEHICLE

(30) Priorité: 16.07.2015 FR 1556738
(43) Date de publication de la demande: 23.05.2018
(73) Titulaire: Valeo Equipements Electriques Moteur, 94046 Créteil Cedex (FR)
(72) Inventeur: BEN-OMRANE, Ryadh, 94046 Créteil Cedex (FR); BOUSSICOT, Frédéric, 94046 Créteil Cedex (FR); MONTEIL, Christophe, 94046 Créteil Cedex (FR)
(86) Numéro de dépôt international: PCT/FR2016/051729
(87) Numéro de publication internationale: WO 2017/009550

(56) Documents cités:
- US-A1- 2003 020 338
- US-A1- 2004 000 817
- US-A1- 2008 197 727
- US-A1- 2012 306 300

## Description

L'invention concerne notamment une machine électrique tournante pour véhicule automobile.

L'invention trouve une application particulièrement avantageuse dans le domaine des machines électriques tournantes telles que les alternateurs ou encore les alterno-démarreurs. On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile.

Les machines électriques tournantes peuvent également être utilisées pour faire fonctionner le véhicule automobile en mode électrique. Elles comportent alors un ensemble électronique, notamment un étage électronique de puissance, fonctionnant, en général, avec une seconde batterie d'une tension comprise entre 24V et 60V. Cependant, le bobinage du rotor est lui alimenté par le réseau 12V du véhicule automobile associé à la première batterie dudit véhicule. Il est donc nécessaire d'isoler électriquement la masse de la première batterie, par exemple au niveau du palier, de la masse de la seconde batterie, par exemple au niveau de l'étage électronique de puissance, pour des raisons de compatibilité électromagnétique car ces batteries ne délivrent pas le même niveau de tension et ne sont pas reliées à la même masse véhicule.

Il est connu d'utiliser de gaines pour isoler ces deux masses mais cela rajoute des pièces à la machine électrique tournante ainsi que des étapes dans le procédé de montage de ladite machine. De plus, il est connu d'utiliser de la résine pour isoler ces deux masses mais cela complexifie le procédé de montage de la machine électrique tournante. Ces solutions sont donc coûteuses.

De façon connue en soi, un alternateur comporte un stator pourvu d'un bobinage électrique formant plusieurs phases. Chaque phase comporte, par exemple, au moins un point neutre ou une sortie de phase ou encore une entrée de phase qui sont formés sur des barres conductrices de stator. Sur certaines machines électriques, il peut arriver que ces barres conductrices soient disposées de manière très proche du palier de ladite machine. Ceci peut augmenter le risque de contact électrique accidentel entre une barre conductrice du bobinage et le palier créant ainsi des courts-circuits. Il est donc nécessaire d'isoler électriquement ces barres conductrices du palier.

Il est également connu de d'utiliser des gaines pour isoler ces barres conductrices mais cela engendre les mêmes inconvénients que précédemment cité. De plus, il est également connu de laisser un espace suffisant entre le palier et lesdites barres pour faire cette isolation. Cependant, cela augmentent l'encombrement de ladite machine. Ces solutions sont donc coûteuses.

Le document US 2004/0000817 A1 divulgue une machine électrique tournante pour un véhicule automobile selon le préambule de la revendication 1.

La présente invention vise à permettre d'éviter les inconvénients de l'art antérieur. En outre, la présente invention vise à permettre d'isoler électriquement les différentes masses entre elles et également d'isoler électriquement les barres conductrices du palier. De plus, la présente invention vise à proposer une machine électrique tournante dont ces fonctions d'isolation sont réalisées de manière simple et peu chère.

A cet effet, la présente invention a donc pour objet une machine électrique tournante pour véhicule automobile selon la revendication 1.

La présente invention permet de réaliser une fonction d'isolation électrique dans plusieurs zones de la machine électrique tournante en utilisant une unique pièce. Ainsi, la machine électrique tournante est isolée électriquement de manière simple, fiable et peu chère tout en conservant des performances optimales de ladite machine.

Selon l'invention, l'ensemble électronique comporte un dissipateur thermique et un étage électronique de puissance monté sur le dissipateur thermique.

L'étage électronique de puissance comporte plusieurs modules de puissance comportant chacun au moins un élément redresseur tel qu'un transistor du type MOSFET. Le palier ne comporte donc pas de composant électronique.

L'ensemble électronique comporte un dissipateur thermique qui est assemblé sur le palier en au moins une zone d'assemblage, notamment en une pluralité de zones d'assemblage, et la pièce polyvalente est agencée pour isoler électriquement le dissipateur thermique du palier dans au moins une zone d'assemblage. Ainsi, les différentes masses électriques de la machine électrique tournante sont isolées électriquement l'une de l'autre.

Notamment, la pièce polyvalente est agencée pour isoler électriquement le dissipateur thermique du palier dans toutes les zones d'assemblage.

Par exemple, le dissipateur thermique est assemblé sur le palier en sept zones d'assemblage.

Dans un mode de mise en œuvre, le dissipateur thermique est assemblé sur le palier au moyen de vis, chaque zone d'assemblage comportant une vis.

Avantageusement, la pièce polyvalente comporte au moins un manchon intercalé entre le dissipateur thermique et le palier en une zone d'assemblage.

Par exemple, la pièce polyvalente comporte un manchon pour chaque zone d'assemblage du dissipateur thermique sur le palier. Notamment, la pièce polyvalente comporte sept manchons.

De manière avantageuse, la pièce polyvalente comporte une partie annulaire définissant une ouverture centrale. Le cas échéant, l'un au moins des manchons est disposé sur un pourtour extérieur de la partie annulaire et l'un au moins des manchons est disposé sur un pourtour interne de ladite partie annulaire.

Dans un mode de réalisation avantageux, le palier comporte une forme en saillie, notamment une collerette, et le manchon s'étend, au moins partiellement, autour de ladite forme en saillie du palier.

Dans une variante de réalisation, le dissipateur thermique comporte une forme en saillie et le manchon s'étend, au moins partiellement, autour de ladite forme en saillie du dissipateur thermique.

Avantageusement, le manchon comporte une jupe cylindrique.

Toujours avantageusement, le manchon comporte, en outre, une partie transversale ajournée, notamment pour le passage d'une vis d'assemblage.

En particulier, la jupe s'étend en saillie notamment à partir d'une face de la partie annulaire. Dans une variante de réalisation avantageuse, le manchon se raccorde à la partie annulaire via un bras.

Dans un mode de réalisation avantageux l'ensemble électronique comporte, en outre, un porte-balais qui est assemblé sur le palier en au moins une zone d'assemblage, notamment en une pluralité de zones d'assemblage, et la pièce polyvalente est agencée pour isoler électriquement le dissipateur thermique du palier dans au moins une zone d'assemblage. Ainsi, les différentes masses électriques de la machine électrique tournante sont isolées électriquement l'une de l'autre.

Par exemple, le porte-balais est assemblé sur le palier en deux zones d'assemblage.

De manière avantageuse, le porte-balais est assemblé sur le palier au moyen de vis, chaque zone d'assemblage comportant une vis.

Avantageusement, la pièce polyvalente comporte au moins un capuchon intercalé entre le dissipateur thermique et le porte-balais en une zone d'assemblage.

De manière avantageuse, la pièce polyvalente comporte notamment un capuchon pour chaque zone d'assemblage du porte-balais sur le palier. Par exemple, la pièce polyvalente comporte deux capuchons.

Dans un mode de réalisation avantageuse, les deux capuchons sont disposés sur le pourtour interne de la partie annulaire.

Avantageusement, le porte-balais comporte une forme en saillie transversale, et le capuchon s'étend, au moins partiellement, autour de ladite forme en saillie transversale.

Par exemple, le capuchon comporte une jupe cylindrique.

Toujours par exemple, le capuchon comporte, en outre, une portion de disque s'étendant radialement, notamment de manière à ce que ladite portion de disque recouvre, au moins partiellement, ladite forme en saillie transversale du porte-balais.

De manière avantageuse, le capuchon se raccorde à la partie annulaire via un bras.

Dans un mode de réalisation avantageux, la machine électrique tournante comporte, en outre, un stator comportant un bobinage électrique, ce bobinage comportant une pluralité de conducteurs électriques et un, au moins, de ces conducteurs comprenant une extrémité formant un point neutre électrique du bobinage et la pièce polyvalente est agencée pour isoler électriquement le palier d'au moins un point neutre. Cela permet d'éviter la formation de ponts salins entre un point neutre électrique du bobinage et le palier dans les zones où ces points neutres sont proches du palier.

Par exemple le bobinage du stator comporte une pluralité de conducteurs de type épingle.

Ce bobinage du stator peut être de type en étoile.

Dans un exemple de mise en œuvre, le bobinage du stator est de type double triphasés, avec notamment six points neutres.

Avantageusement, la pièce polyvalente est agencée pour isoler électriquement chaque point neutre du palier.

Par exemple, chaque point neutre du bobinage est disposé, au moins partiellement, radialement en regard du palier.

La pièce polyvalente comporte, avantageusement, au moins un muret intercalé, notamment radialement, entre le palier et un point neutre.

Par exemple, la pièce polyvalente comporte un muret pour isoler chaque point neutre. Notamment, la pièce polyvalente comporte six murets.

De manière avantageuse, le muret comporte une forme en arc de cercle s'étendant, au moins partiellement, autour du point neutre.

Avantageusement, le muret s'étend en saillie à partir d'une face de la partie annulaire et, en particulier, à partir de la face avant de la partie annulaire, c'est-à-dire la face en regard du stator.

Dans un exemple de mise en œuvre, l'extrémité de conducteur formant le point neutre est soudée à au moins une barre électriquement conductrice et le muret s'étend, au moins partiellement, autour de l'ensemble formé par le point neutre et la barre conductrice.

De plus, la pièce polyvalente comprend, avantageusement, au moins une ouverture agencée pour permettre le passage d'une extrémité de phase d'un conducteur, opposée au point neutre, permettant l'alimentation électrique du conducteur.

Dans un mode de réalisation avantageux, la pièce polyvalente est agencée pour isoler thermiquement l'ensemble électronique. Elle est, en particulier, agencée pour isoler thermiquement l'ensemble électronique du stator. Notamment, la pièce polyvalente est agencée pour isoler thermiquement le dissipateur thermique du stator.

Avantageusement, la partie annulaire de la pièce polyvalente présente une épaisseur apte à isoler thermiquement l'ensemble électronique sans augmenter la longueur axiale de ladite machine.

De manière avantageuse, la pièce polyvalente est disposée, axialement, entre l'ensemble électronique et le palier et notamment entre le dissipateur thermique et le palier.

De plus, la partie annulaire de la pièce polyvalente s'étend, avantageusement, sensiblement radialement.

Dans un exemple de mise en œuvre, la pièce polyvalente est agencée pour être au moins partiellement en appui sur une surface extérieure du palier.

Da manière avantageuse, la pièce polyvalente est formée d'un seul tenant.

Par exemple, la pièce polyvalente comprend un matériau plastique. En particulier, la pièce polyvalente comprend un matériau thermoplastique.

Selon une réalisation, la pièce polyvalente est formée uniquement d'un matériau plastique.

Dans un exemple de mise en œuvre, la pièce polyvalente est formée par moulage par injection.

Dans un mode de réalisation avantageux, la pièce polyvalente comporte au moins une patte de maintien agencée pour maintenir le dissipateur thermique.

Par exemple, la pièce polyvalente comporte cinq pattes de maintien.

De manière avantageuse, la patte de maintien s'étend en saillie, dans une direction axiale, à partir d'une face arrière de la partie annulaire.

La patte de maintien présente, avantageusement, une forme de croix.

Dans une variante de réalisation, la pièce polyvalente comporte au moins une lame de souplesse adaptée pour maintenir le dissipateur thermique.

Dans un mode de réalisation avantageux, une machine électrique tournante formant un alternateur ou un alterno-démarreur.

En outre, la présente invention concerne une machine électrique tournante pour véhicule automobile comprenant :
- une machine électrique tournante comportant :
   - un palier agencé pour être connecté au premier potentiel de masse,
   - un ensemble électronique agencé pour être assemblé avec le palier et pour être connecté au second potentiel de masse,
   - une pièce polyvalente agencée pour participer à l'assemblage de l'ensemble électronique avec le palier et pour assurer une fonction d'isolation électrique en au moins deux zones distinctes.

Selon une réalisation, l'ensemble électronique comporte un dissipateur thermique connecté au second potentiel de masse.

Avantageusement, un tel ensemble permet d'isoler électriquement la masse d'une première batterie de la masse d'une seconde batterie pour des raisons de compatibilité électromagnétique car ces batteries ne délivrent pas le même niveau de tension et ne sont pas reliées à la même masse véhicule. Cela permet donc de ne pas créer d'interférence entre le potentiel de la première batterie et celui de la seconde batterie.

La présente invention pourra être mieux comprise à la lecture de la description détaillée qui va suivre, d'exemples de mise en œuvre non limitatifs de l'invention et de l'examen des dessins annexés, sur lesquels :
- la figure 1 représente, schématiquement et partiellement, une vue en coupe d'une machine électrique tournante selon un exemple de mise en œuvre de l'invention,
- la figure 2 représente, schématiquement et partiellement, une vue de dessous en perspective d'une pièce polyvalente selon un exemple de mise en œuvre de l'invention,
- la figure 3 représente, schématiquement et partiellement, une vue de dessus en perspective d'une pièce polyvalente selon un exemple de mise en œuvre de l'invention,
- la figure 4 représente, schématiquement et partiellement, une vue en perspective d'une partie de la machine électrique tournante selon l'exemple de réalisation de la figure 1,
- la figure 5 représente, schématiquement et partiellement, une vue en coupe d'une autre partie de la machine électrique tournante selon l'exemple de réalisation de la figure 1,
- la figure 6 représente, schématiquement et partiellement, une vue en perspective d'une autre partie de la machine électrique tournante selon l'exemple de réalisation de la figure 1,
- la figure 7 représente, schématiquement et partiellement, une vue de dessus en perspective d'une pièce polyvalente selon un autre exemple de mise en oeuvre de l'invention.

Les éléments identiques, similaires ou analogues conservent les mêmes références d'une figure à l'autre.

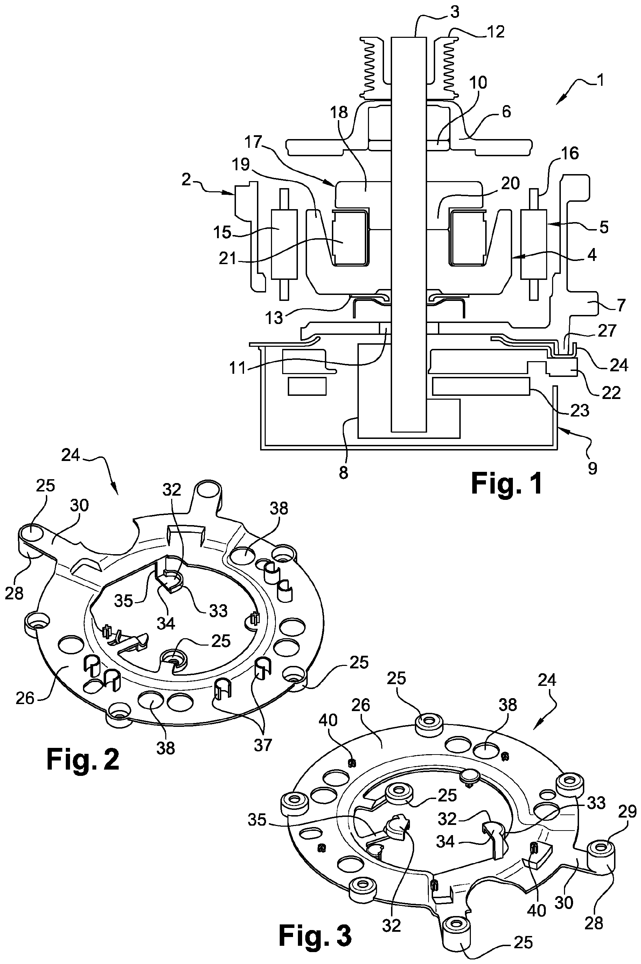

La figure 1 représente un exemple de machine électrique tournante 1 compacte et polyphasée, notamment pour véhicule automobile. Cette machine électrique tournante 1 transforme de l'énergie mécanique en énergie électrique, en mode alternateur, et peut fonctionner en mode démarreur pour transformer de l'énergie électrique en énergie mécanique.

La machine électrique tournante 1 comporte un carter 2. A l'intérieur de ce carter 2, elle comporte, en outre, un arbre 3, un rotor 4 solidaire en rotation de l'arbre 3 et un stator 5 entourant le rotor 4. Le mouvement de rotation du rotor 4 se fait autour d'un axe X. Dans la suite de la description les orientations radiale, transversale et axiale sont à considérer par rapport à cet axe X.

Une poulie 12 est fixée sur une extrémité avant de l'arbre 3, au niveau du palier avant 6, par exemple à l'aide d'un écrou en appui sur le fond de la cavité de cette poulie. Cette poulie 12 permet de transmettre le mouvement de rotation à l'arbre 3.

L'extrémité arrière de l'arbre 3 porte, ici, des bagues collectrices appartenant à un collecteur et reliées par des liaisons filaires au bobinage. Un ensemble électronique 9 comporte un porte-balais 8 comprenant des balais disposés de façon à frotter sur les bagues collectrices. Le porte-balais 8 est relié à un régulateur de tension compris dans un pont redresseur (non représenté).

Dans cet exemple, le carter 2 comporte un palier avant 6 et un palier arrière 7 qui sont assemblés ensemble. Ces paliers 6, 7 sont de forme creuse et portent, chacun, centralement un roulement à billes 10, 11 respectif pour le montage à rotation de l'arbre 3. Dans la suite de la description, les termes « avant » et « arrière » font référence au côté en regard de la poulie et au côté en regard de l'ensemble électronique, respectivement.

Le palier avant 6 et le palier arrière 7 peuvent comporter, en outre, des ouvertures sensiblement latérales pour le passage de l'air en vue de permettre le refroidissement de la machine électrique tournante par circulation d'air engendrée par la rotation d'un ventilateur 13. Le ventilateur est disposé, par exemple, sur la face dorsale arrière du rotor, c'est-à-dire au niveau du palier arrière 7.

Dans cet exemple de réalisation, le stator 5 comporte un corps 15 et un bobinage électrique 16. Le corps 15 est en forme d'un paquet de tôles doté d'encoches, par exemple du type semi fermée ou ouverte. Une encoche peut être équipée d'isolant d'encoches pour le montage des phases du stator formant le bobinage 16. Chaque phase comporte au moins un conducteur traversant les encoches du corps 15 et formant, avec toutes les phases, un chignon avant et un chignon arrière de part et d'autre du corps du stator. Le bobinage 16 du stator est relié à l'électronique de puissance.

Le rotor 4 est, par exemple, un rotor à griffe. Il comporte deux roues polaires 17. Chaque roue polaire 17 est formée d'un flasque 18 et d'une pluralité de pôles magnétiques 19 notamment en forme de griffes. Le rotor 4 comporte, en outre, un noyau 20 cylindrique qui est intercalé axialement entre les roues polaires 17. Ici, ce noyau 17 est formé de deux demi noyaux appartenant chacun à l'une des roues polaires 17.

Le rotor 4 comporte, entre le noyau 20 et les pôles magnétiques 19, une bobine 21 comportant, ici, un moyeu de bobinage et un bobinage électrique sur ce moyeu.

En variante, le rotor 4 peut également comporter des aimants permanents (non représentés) interposés entre deux pôles magnétiques voisins à la périphérie externe du rotor.

Lorsque le bobinage est alimenté électriquement à partir des balais, le rotor 4 est magnétisé et devient un rotor inducteur avec formation de pôles magnétiques Nord-Sud au niveau des pôles magnétiques 19. Ce rotor inducteur crée un courant induit alternatif dans le stator induit lorsque l'arbre 3 est en rotation. Le pont redresseur transforme alors ce courant induit alternatif en un courant continu, notamment pour alimenter les charges et les consommateurs du réseau de bord du véhicule automobile ainsi que pour recharger sa batterie.

L'ensemble électronique 9 comporte, ici, un étage électronique de puissance 23, un étage électronique de contrôle, un dissipateur thermique 22 et le porte-balais 8. Le dissipateur thermique 22 est agencé notamment pour permettre le refroidissement de l'étage électronique de puissance 23. Le porte-balais 8 est agencé notamment pour alimenter électriquement le rotor 4.

L'ensemble électronique 9 est agencé pour être assemblé avec le palier et notamment avec le palier arrière 7.

L'étage électronique de puissance 23 est relié électriquement aux sorties de phase du bobinage et à l'étage électronique de contrôle.

L'étage électronique de puissance 23 comporte plusieurs modules de puissance. Chaque module de puissance comporte une unité de commande et au moins un élément redresseur tel qu'un transistor du type MOSFET.

L'étage électronique de puissance 23 est monté sur le dissipateur thermique 22. Le dissipateur 22 est donc positionné entre l'étage électronique 23 et le palier arrière 7. Le palier arrière 7 ne comporte pas de composant électronique.

La bobine 21 du rotor 4 est alimentée par une première batterie présentant un premier potentiel, par exemple un potentiel de 12V et un premier potentiel de masse. Ce premier potentiel de masse est présent sur le palier arrière 7 lors du fonctionnement de la machine électrique tournante 1.

L'étage électronique de puissance 23 est connecté à une seconde batterie présentant un second potentiel différent du premier potentiel de la première batterie et un second potentiel de masse. Par exemple, le second potentiel est de 60V. Le second potentiel de masse est présent sur le dissipateur thermique 22 lors du fonctionnement de la machine électrique tournante 1.

La machine électrique tournante 1 comporte, en outre, une pièce polyvalente 24 agencée pour participer à l'assemblage de l'ensemble électronique 9 avec le palier 7 et pour assurer une fonction d'isolation électrique en au moins deux zones distinctes.

En particulier, la pièce polyvalente 24 est agencée pour isoler la masse de la première batterie au niveau du palier 7 de la masse de la seconde batterie au niveau de l'étage électronique de puissance 23 et donc du dissipateur 22.

Dans cet exemple, le dissipateur thermique 22 est assemblé sur le palier 7 en au moins une zone d'assemblage, notamment en une pluralité de zones d'assemblage. La pièce polyvalente 24 est, ici, agencée pour isoler électriquement le dissipateur thermique 22 du palier 7 dans au moins une zone d'assemblage. De préférence, la pièce polyvalente 24 est agencée pour isoler électriquement le dissipateur thermique 22 du palier 7 dans toutes les zones d'assemblage.

Le dissipateur thermique 22 est, ici, assemblé sur le palier 7 en sept zones d'assemblage. Le dissipateur thermique 22 est assemblé sur le palier 7 au moyen de vis, chaque zone d'assemblage comportant une vis.

Les figures 2 et 3 illustrent plus précisément un exemple de réalisation de la pièce polyvalente 24, respectivement vue de dessous et vue de dessus. Ainsi, la figure 2 illustre une face avant de la pièce polyvalente 24, c'est-à-dire la face en regard du stator 5 et la figure 3 illustre une face arrière de la pièce polyvalente 24, c'est-à-dire la face en regard de l'ensemble électronique 9.

Dans l'exemple illustré ici, la pièce polyvalente 24 comporte au moins un manchon 25 intercalé entre le dissipateur thermique 22 et le palier 7 en une zone d'assemblage. De préférence, la pièce polyvalente 24 comporte un manchon 25 pour chaque zone d'assemblage du dissipateur thermique 22 sur le palier 7. Dans cet exemple, la pièce polyvalente 24 comporte sept manchons 25.

La pièce polyvalente comporte, ici, une partie annulaire 26 définissant une ouverture centrale. De préférence, l'un au moins des manchons 25 est disposé sur un pourtour extérieur de la partie annulaire 26 et l'un au moins des manchons 25 est disposé sur un pourtour interne de ladite partie annulaire 26.

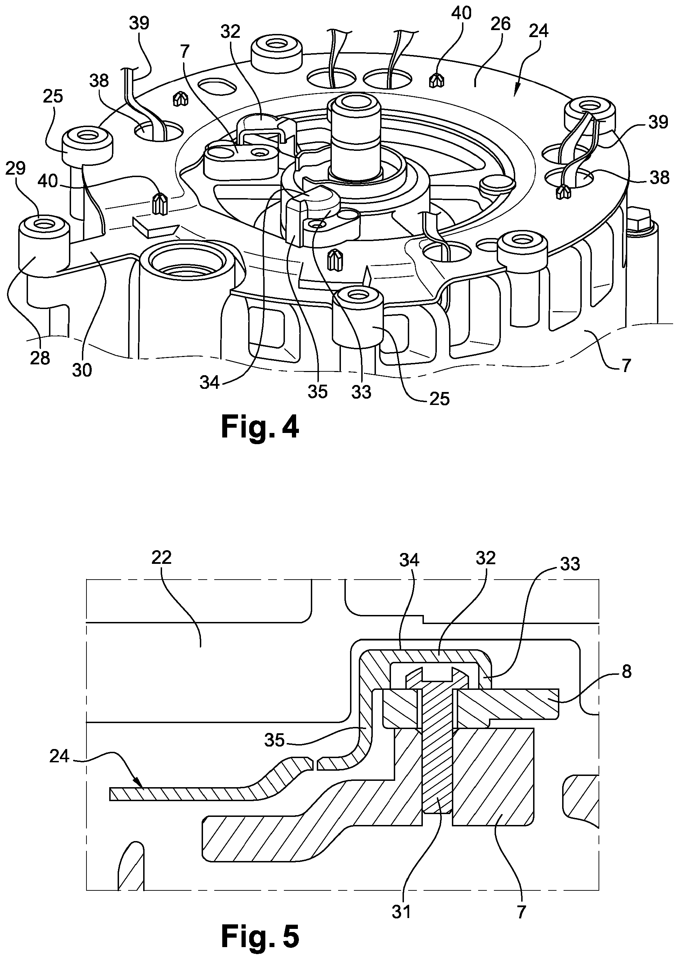

Dans l'exemple des figures 1 à 4, le palier 7 comporte une forme en saillie 27, notamment une collerette, et le manchon 25 s'étend, au moins partiellement, autour de ladite forme en saillie 27 du palier 7. Le manchon 25 comporte, alors, une jupe 28 cylindrique. De plus, le manchon 25 comporte, en outre, une partie transversale ajournée 29, notamment pour le passage d'une vis d'assemblage. En particulier, la jupe 28 s'étend en saillie, par exemple à partir d'une face de la partie annulaire 26. En variante, le manchon se raccorde à la partie annulaire via un bras 30. L'exemple de pièce polyvalente 24 décrit ici comporte des manchons 25 raccordés à la partie annulaire 26 via un bras 30 et des manchons s'étendant directement à partir de la partie annulaire 26.

De préférence, le porte-balais 8 est assemblé sur le palier 7 en au moins une zone d'assemblage, notamment en une pluralité de zones d'assemblage. La pièce polyvalente 24 est agencée pour isoler électriquement le dissipateur thermique 22 du palier 7 dans au moins une zone d'assemblage du porte-balais 8 sur le palier 7. Dans l'exemple décrit ici, le porte-balais 8 est assemblé sur le palier 7 en deux zones d'assemblage. De plus, le porte-balais 8 est assemblé sur le palier 7 au moyen de vis, chaque zone d'assemblage comportant une vis 31.

Dans l'exemple illustré par les figures 2 à 5, la pièce polyvalente 24 comporte au moins un capuchon 32 intercalé entre le dissipateur thermique 22 et le porte-balais 8 en une zone d'assemblage. De préférence, la pièce polyvalente 24 comporte un capuchon 32 pour chaque zone d'assemblage du porte-balais 8 sur le palier 7. Notamment ici, la pièce polyvalente 24 comporte deux capuchons 32.

Dans cet exemple, les deux capuchons 32 sont disposés sur le pourtour interne de la partie annulaire 30. De plus, chaque capuchon 32 se raccorde à la partie annulaire 30 via un bras 35.

Dans l'exemple illustré ici, le porte-balais 8 comporte une forme en saillie transversale, et le capuchon 32 s'étend, au moins partiellement, autour de ladite forme en saillie transversale du porte-balais 8. Toujours dans l'exemple illustré, le capuchon 32 comporte une jupe 33 cylindrique. De plus, le capuchon 32 comporte, en outre, une portion de disque 34 s'étendant radialement, par exemple de manière à ce que ladite portion de disque recouvre, au moins partiellement, ladite forme du porte-balais 8.

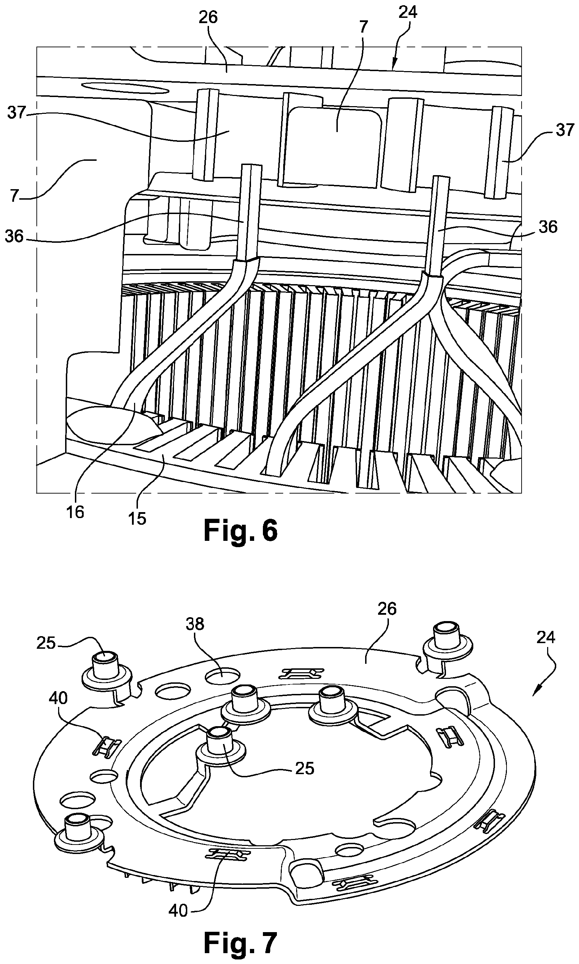

Le bobinage 16 du stator 5 peut être de type en étoile. Ainsi, le bobinage 16 comporte une pluralité de conducteurs électriques et un au moins de ces conducteurs comprend une extrémité formant un point neutre 36 électrique du bobinage 16. Dans l'exemple illustré, le bobinage 16 est de type double triphasé, avec notamment six points neutres 36. Chaque point neutre 36 du bobinage 16 est disposé, au moins partiellement, radialement en regard du palier 7. Pour des soucis de clarté, seul les extrémités formant les points neutres 36 des conducteurs sont représentées sur la figure 6.

Les conducteurs peuvent être obtenus à partir d'un fil continu recouvert d'émail ou encore à partir d'éléments conducteurs en forme de barre tels que des épingles reliées entre elles.

Dans l'exemple représenté sur les figures 2 et 6, la pièce polyvalente 24 est, en outre, agencée pour isoler électriquement le palier 7 d'au moins un point neutre 36. De préférence, la pièce polyvalente 24 est agencée pour isoler électriquement chaque point neutre 36 du palier 7.

Dans cet exemple, la pièce polyvalente 24 comporte au moins un muret 37 intercalé, notamment radialement, entre le palier 7 et un point neutre 36. De préférence, la pièce polyvalente 24 comporte un muret 37 pour isoler chaque point neutre 36. Notamment, la pièce polyvalente 24 comporte six murets 37.

Le muret 37 comporte, ici, une forme en arc de cercle s'étendant, au moins partiellement, autour du point neutre 36. De plus, le muret 37 peut s'étendre en saillie à partir d'une face de la partie annulaire 26. En particulier, à partir de la face avant de la partie annulaire 26, c'est-à-dire la face en regard du stator.

En variante, l'extrémité de conducteur formant le point neutre 36 peut être soudée à au moins une barre électriquement conductrice. Ainsi, le muret 37 s'étend alors, au moins partiellement, autour de l'ensemble formé par le point neutre 36 et la barre conductrice.

De plus, dans l'exemple présenté ici, la pièce polyvalente 24 comprend au moins une ouverture 38 agencée pour permettre le passage d'une extrémité de phase 39 d'un conducteur, opposée au point neutre 36, permettant l'alimentation électrique dudit conducteur.

La pièce polyvalente 24 peut, en outre, être agencée pour isoler thermiquement l'ensemble électronique 9 du stator 5. Notamment, la pièce polyvalente peut être agencée pour isoler thermiquement le dissipateur thermique 22 du stator 5. Ainsi, la partie annulaire 26 de la pièce polyvalente 24 présente une épaisseur apte à isoler thermiquement l'ensemble électronique 9.

Dans l'exemple illustré, la pièce polyvalente 24 est disposée, axialement, entre l'ensemble électronique 9 et le palier 7.En particulier, la pièce polyvalente est disposée entre le palier 7 et le dissipateur 22. Elle sépare donc une partie machine, comprenant les paliers 6, 7, le rotor 4 et le stator 5, de l'ensemble électronique 9 comprenant le dissipateur thermique 22 et l'étage électronique de puissance 23. La partie machine ne comporte donc pas de composant électronique de puissance.

De plus, la partie annulaire 26 de la pièce polyvalente 24 s'étend sensiblement radialement. En outre, la pièce polyvalente 24 est agencée pour être au moins partiellement en appui sur une surface extérieure du palier 7.

De préférence, la pièce polyvalente 24 est formée d'un seul tenant. Par exemple, la pièce polyvalente 24 est formée par moulage par injection.

Toujours de préférence, la pièce polyvalente 24 comprend un matériau plastique apte à réaliser les fonctions d'isolation électrique et thermique de ladite pièce polyvalente 24. En particulier, la pièce polyvalente 24 comprend un matériau thermoplastique.

Dans l'exemple illustré par les figures, la pièce polyvalente 24 comporte au moins une patte de maintien 40 agencée pour maintenir le dissipateur thermique 22. La pièce polyvalente 24 comporte, ici, cinq pattes de maintien 40. Chaque patte de maintien s'étend en saillie, dans une direction axiale, à partir d'une face arrière de la pièce polyvalente 24. La patte de maintien 40 peut comporter une forme de croix.

La figure 7 illustre une variante avantageuse de réalisation de la pièce polyvalente 24. Dans cette variante, le dissipateur thermique 22 comporte une forme en saillie et le manchon 25 s'étend, au moins partiellement, autour de ladite forme en saillie dudit dissipateur. De plus, les pattes de maintien 40 de la pièce polyvalente 24 comportent une forme de lames de souplesse.

La pièce polyvalente permet de réaliser plusieurs fonctions d'isolation électrique. En effet, ladite pièce polyvalente permet d'isoler l'ensemble électronique, notamment le dissipateur thermique, du palier dans différentes zones d'assemblage et également d'isoler les différents points neutres du palier. Ainsi, les zones distinctes où la pièce polyvalente assure une fonction d'isolation électrique sont, par exemple, les zones d'assemblage du dissipateur thermique sur le palier, les zones d'assemblage du porte-balais sur le palier et les zones où un point neutre du bobinage est radialement en regard du palier.

En outre, la pièce polyvalente permet de réaliser une fonction d'isolation thermique en créant une barrière thermique empêchant, au moins en partie, l'air chaud du stator de traverser l'ensemble électronique.

De plus, ces fonctions d'isolation sont réalisées par la même pièce, à savoir la pièce polyvalente. Cela permet donc de simplifier l'architecture de la machine électrique tournante. De plus, le procédé de montage d'une telle machine électrique tournante est également simplifié puisqu'il n'y a qu'une seule pièce à monter. Une telle machine électrique tournante est donc peu chère.

Il est ainsi possible de réaliser une machine électrique tournante dont un ensemble électronique est assemblé, de manière intégré, avec ladite machine et dont cet ensemble est alimenté par une batterie différente de celle alimentant les bobinages de la machine. Une telle machine électrique tournante peut être un alternateur ou un alterno-démarreur.

La présente invention trouve des applications en particulier dans le domaine des machines électriques tournantes pour alternateur ou alterno-démarreur mais elle pourrait également s'appliquer à tout type de machine tournante.

Bien entendu, la description qui précède a été donnée à titre d'exemple uniquement et ne limite pas le domaine de l'invention .

## Revendications

1. Machine électrique tournante (1) pour véhicule automobile, cette machine électrique tournante (1) comportant :
- un palier (7) ;
- un ensemble électronique (9) comportant un dissipateur thermique (22) et un étage électronique de puissance (23) monté sur le dissipateur thermique (22), l'étage électronique de puissance (23) comportant plusieurs modules de puissance comportant chacun au moins un élément redresseur tel qu'un transistor du type MOSFET ; l'ensemble électronique (9) étant agencé pour être assemblé avec le palier (7) et pour comporter tout ledit étage électronique de puissance (23) de la machine électrique tournante (1) de sorte que ledit palier (7) ne comporte pas de composant électronique ; la machine électrique tournante (1) étant **caractérisée en ce qu'**elle comporte une pièce polyvalente (24) agencée pour participer à l'assemblage de l'ensemble électronique (9) avec le palier (7) et pour assurer une fonction d'isolation électrique entre le palier (7) agencé pour être connecté au premier potentiel de masse et l'ensemble électronique (9) agencé pour être connecté au second potentiel de masse en au moins deux zones distinctes, la pièce polyvalente (24) étant disposée, axialement selon un axe de rotation d'un rotor (4) de la machine électrique tournante (1) entre le palier (7) et le dissipateur thermique (22), **en ce que** le dissipateur thermique (22) est assemblé sur le palier (7) en au moins une zone d'assemblage, notamment en une pluralité de zones d'assemblage et **en ce que** la pièce polyvalente (24) est agencée pour isoler électriquement le dissipateur thermique (22) du palier (7) dans au moins une zone d'assemblage, et pour isoler électriquement l'une de l'autre les différentes masses électriques de la machine électrique tournante (1).

2. Machine électrique tournante (1) selon la revendication 1, **caractérisée en ce que** la pièce polyvalente (24) comporte au moins un manchon (25) intercalé entre le dissipateur thermique (22) et le palier (7) en une zone d'assemblage.

3. Machine électrique tournante (1) selon la revendication 2, **caractérisée en ce que** le palier (7) comporte une forme en saillie (27), notamment une collerette, et le manchon (25) s'étend, au moins partiellement, autour de ladite forme en saillie (27) du palier (7).

4. Machine électrique tournante (1) selon l'une quelconque des revendications précédentes, **caractérisée en ce que** l'ensemble électronique (9) comporte, en outre, un porte-balais (8) qui est assemblé sur le palier (7) en au moins une zone d'assemblage, notamment en une pluralité de zones d'assemblage et **en ce que** la pièce polyvalente (24) est agencée pour isoler électriquement le dissipateur thermique (22) du palier (7) dans au moins une zone d'assemblage.

5. Machine électrique tournante (1) selon la revendication 4, **caractérisée en ce que** la pièce polyvalente (24) comporte au moins un capuchon (32) intercalé entre le dissipateur thermique (22) et le porte-balais (8) en une zone d'assemblage.

6. Machine électrique tournante (1) selon la revendication 5, **caractérisée en ce que** le porte-balais (8) comporte une forme en saillie transversale et **en ce que** le capuchon (32) s'étend, au moins partiellement, autour de ladite forme en saillie transversale.

7. Machine électrique tournante (1) selon l'une quelconque des revendications 1 à 6, **caractérisée en ce qu'**elle comporte, en outre, un stator (5) comportant un bobinage (16) électrique, ce bobinage (16) comportant une pluralité de conducteurs électriques et un au moins de ces conducteurs comprenant une extrémité formant un point neutre (36) électrique du bobinage (16) et **en ce que** la pièce polyvalente (24) est agencée pour isoler électriquement le palier (7) d'au moins un point neutre (36).

8. Machine électrique tournante (1) selon la revendication 7, **caractérisée en ce que** la pièce polyvalente (24) comporte au moins un muret (37) intercalé, notamment radialement, entre le palier (7) et un point neutre (36).

9. Machine électrique tournante (1) selon la revendication 8, **caractérisée en ce que** le muret (37) comporte une forme en arc de cercle s'étendant, au moins partiellement, autour du point neutre (36).

10. Machine électrique tournante (1) l'une quelconque des revendications 1 à 9, **caractérisée en ce que** la pièce polyvalente (24) est agencée pour isoler thermiquement l'ensemble électronique (9).

11. Machine électrique tournante (1) l'une quelconque des revendications 1 à 10, **caractérisée en ce que** la pièce polyvalente (24) est formée d'un seul tenant.

12. Machine électrique tournante (1) l'une quelconque des revendications 1 à 11, **caractérisée en ce que** la pièce polyvalente (24) comprend un matériau plastique.

13. Machine électrique tournante selon l'une quelconque des revendications 1 à 12, formant un alternateur ou un alterno-démarreur.

## Patentansprüche

1. Drehende elektrische Maschine (1) für ein Kraftfahrzeug, wobei diese drehende elektrische Maschine (1) aufweist:
- ein Lager (7);
- eine elektronische Einheit (9), die einen Wärmeableiter (22) und eine auf den Wärmeableiter (22) montierte elektronische Leistungsstufe (23) aufweist, wobei die elektronische Leistungsstufe (23) mehrere Leistungsmodule aufweist, die je mindestens ein Gleichrichterelement wie einen Transistor der Art MOSFET aufweisen; wobei die elektronische Einheit (9) eingerichtet ist, um mit dem Lager (7) zusammengebaut zu werden und um die ganze elektronische Leistungsstufe (23) der drehenden elektrischen Maschine (1) aufzuweisen, so dass das Lager (7) keinen elektronischen Bestandteil aufweist;
wobei die drehende elektrische Maschine (1) **dadurch gekennzeichnet ist, dass** sie ein Mehrzweckbauteil (24) aufweist, das eingerichtet ist, um am Zusammenbau der elektronischen Einheit (9) mit dem Lager (7) mitzuwirken und um eine Funktion der elektrischen Isolierung zwischen dem Lager (7), das eingerichtet ist, um mit dem ersten Massepotential verbunden zu werden, und der elektronischen Einheit (9) zu gewährleisten, die eingerichtet ist, um in mindestens zwei unterschiedlichen Bereichen mit dem zweiten Massepotential verbunden zu werden, wobei das Mehrzweckbauteil (24) axial gemäß einer Drehachse eines Rotors (4) der drehenden elektrischen Maschine (1) zwischen dem Lager (7) und dem Wärmeableiter (22) angeordnet ist, dass der Wärmeableiter (22) in mindestens einem Zusammenbaubereich an das Lager (7) angefügt ist, insbesondere in einer Vielzahl von Zusammenbaubereichen, und dass das Mehrzweckbauteil (24) eingerichtet ist, um den Wärmeableiter (22) in mindestens einem Zusammenbaubereich elektrisch vom Lager (7) zu isolieren, und um die verschiedenen elektrischen Massen der drehenden elektrischen Maschine (1) elektrisch voneinander zu isolieren.

2. Drehende elektrische Maschine (1) nach Anspruch 1, **dadurch gekennzeichnet, dass** das Mehrzweckbauteil (24) mindestens eine Muffe (25) aufweist, die in einem Zusammenbaubereich zwischen dem Wärmeableiter (22) und dem Lager (7) eingefügt ist.

3. Drehende elektrische Maschine (1) nach Anspruch 2, **dadurch gekennzeichnet, dass** das Lager (7) eine vorstehende Form (27), insbesondere einen Kragen, aufweist, und die Muffe (25) sich zumindest teilweise um die vorstehende Form (27) des Lagers (7) herum erstreckt.

4. Drehende elektrische Maschine (1) nach einem der vorhergehenden Ansprüche, **dadurch gekennzeichnet, dass** die elektronische Einheit (9) außerdem einen Bürstenhalter (8) aufweist, der in mindestens einem Zusammenbaubereich an das Lager (7) angefügt ist, insbesondere in einer Vielzahl von Zusammenbaubereichen, und dass das Mehrzweckbauteil (24) eingerichtet ist, um den Wärmeableiter (22) in mindestens einem Zusammenbaubereich elektrisch vom Lager (7) zu isolieren.

5. Drehende elektrische Maschine (1) nach Anspruch 4, **dadurch gekennzeichnet, dass** das Mehrzweckbauteil (24) mindestens eine Kappe (32) aufweist, die zwischen dem Wärmeableiter (22) und dem Bürstenhalter (8) in einem Zusammenbaubereich eingefügt ist.

6. Drehende elektrische Maschine (1) nach Anspruch 5, **dadurch gekennzeichnet, dass** der Bürstenhalter (8) eine quer vorstehende Form aufweist, und dass die Kappe (32) sich zumindest teilweise um die quer vorstehende Form herum erstreckt.

7. Drehende elektrische Maschine (1) nach einem der Ansprüche 1 bis 6, **dadurch gekennzeichnet, dass** sie außerdem einen Stator (5) aufweist, der eine elektrische Wicklung (16) aufweist, wobei diese Wicklung (16) eine Vielzahl von elektrischen Leitern aufweist und mindestens einer dieser Leiter ein Ende enthält, das einen elektrischen Neutralpunkt (36) der Wicklung (16) bildet, und dass das Mehrzweckbauteil (24) eingerichtet ist, um das Lager (7) von mindestens einem Neutralpunkt (36) elektrisch zu isolieren.

8. Drehende elektrische Maschine (1) nach Anspruch 7, **dadurch gekennzeichnet, dass** das Mehrzweckbauteil (24) mindestens einen hochstehenden Rand (37) aufweist, der insbesondere radial zwischen dem Lager (7) und einem Neutralpunkt (36) eingefügt ist.

9. Drehende elektrische Maschine (1) nach Anspruch 8, **dadurch gekennzeichnet, dass** der hochstehende Rand (37) eine Kreisbogenform aufweist, die sich zumindest teilweise um den Neutralpunkt (36) herum erstreckt.

10. Drehende elektrische Maschine (1) nach einem der Ansprüche 1 bis 9, **dadurch gekennzeichnet, dass** das Mehrzweckbauteil (24) eingerichtet ist, um die elektronische Einheit (9) thermisch zu isolieren.

11. Drehende elektrische Maschine (1) nach einem der Ansprüche 1 bis 10, **dadurch gekennzeichnet, dass** das Mehrzweckbauteil (24) aus einem Stück geformt ist.

12. Drehende elektrische Maschine (1) nach einem der Ansprüche 1 bis 11, **dadurch gekennzeichnet, dass** das Mehrzweckbauteil (24) einen Kunststoff enthält.

13. Drehende elektrische Maschine nach einem der Ansprüche 1 bis 12, die einen Generator oder einen Starter-Generator bildet.

## Claims

1. Rotating electric machine (1) for a motor vehicle, this rotating electric machine (1) comprising:
- a bracket (7);
- an electronic assembly (9) comprising a heat sink (22) and a power electronics stage (23) fitted to the heat sink (22),
the power electronics stage (23) comprising a plurality of power modules each comprising at least one rectifier element such as a transistor of the MOSFET type; the electronic assembly (9) being arranged so as to be assembled with the bracket (7) and so as to comprise all of said power electronics stage (23) of the rotating electric machine (1) such that said bracket (7) does not comprise any electronic components;
the rotating electric machine (1) being **characterized in that** it comprises a multi-purpose part (24) which is arranged so as to contribute to the assembling of the electronic assembly (9) with the bracket (7) and so as to ensure an electrical insulation function between the bracket (7), which is arranged so as to be connected to the first ground potential, and the electronic assembly (9), which is arranged so as to be connected to the second ground potential, in at least two distinct zones, the multi-purpose part (24) being disposed, axially along an axis of rotation of a rotor (4) of the rotating electric machine (1), between the bracket (7) and the heat sink (22), **in that** the heat sink (22) is assembled on the bracket (7) in at least one assembly zone, in particular in a plurality of assembly zones, and **in that** the multi-purpose part (24) is arranged so as to electrically insulate the heat sink (22) from the bracket (7) in at least one assembly zone, and so as to electrically insulate the various electrical grounds of the rotating electric machine (1) from each other.

2. Rotating electric machine (1) according to Claim 1, **characterized in that** the multi-purpose part (24) comprises at least one sleeve (25) interposed between the heat sink (22) and the bracket (7) in an assembly zone.

3. Rotating electric machine (1) according to Claim 2, **characterized in that** the bracket (7) comprises a protruding shape (27), in particular a flange, and the sleeve (25) extends, at least in part, around said protruding shape (27) of the bracket (7).

4. Rotating electric machine (1) according to any one of the preceding claims, **characterized in that** the electronic assembly (9) further comprises a brush holder (8) which is assembled on the bracket (7) in at least one assembly zone, in particular in a plurality of assembly zones, and **in that** the multi-purpose part (24) is arranged so as to electrically insulate the heat sink (22) from the bracket (7) in at least one assembly zone.

5. Rotating electric machine (1) according to Claim 4, **characterized in that** the multi-purpose part (24) comprises at least one cap (32) interposed between the heat sink (22) and the brush holder (8) in an assembly zone.

6. Rotating electric machine (1) according to Claim 5, **characterized in that** the brush holder (8) comprises a transversely protruding shape and **in that** the cap (32) extends, at least in part, around said transversely protruding shape.

7. Rotating electric machine (1) according to any one of Claims 1 to 6, **characterized in that** it further comprises a stator (5) comprising an electrical winding (16), this winding (16) comprising a plurality of electrical conductors and at least one of these conductors comprising an end that forms an electrical neutral point (36) of the winding (16), and **in that** the multi-purpose part (24) is arranged so as to electrically insulate the bracket (7) from at least one neutral point (36).

8. Rotating electric machine (1) according to Claim 7, **characterized in that** the multi-purpose part (24) comprises at least one wall (37) interposed, in particular radially, between the bracket (7) and a neutral point (36).

9. Rotating electric machine (1) according to Claim 8, **characterized in that** the wall (37) comprises a shape of a circular arc extending, at least in part, around the neutral point (36).

10. Rotating electric machine (1) according to any one of Claims 1 to 9, **characterized in that** the multi-purpose part (24) is arranged so as to thermally insulate the electronic assembly (9).

11. Rotating electric machine (1) according to any one of Claims 1 to 10, **characterized in that** the multi-purpose part (24) is formed in one piece.

12. Rotating electric machine (1) according to any one of Claims 1 to 11, **characterized in that** the multi-purpose part (24) comprises a plastics material.

13. Rotating electric machine according to any one of Claims 1 to 12, forming an alternator or a starter-alternator.
